# FASCICULE DE BREVET EUROPEEN

(11) **EP 0 831 071 B1**
(45) Date de publication et mention de la délivrance du brevet: **13.11.2002**
(21) Numéro de dépôt: 97402182.6
(22) Date de dépôt: 19.09.1997
(51) Int. Cl.: C03C 3/087, C03C 4/08, B32B 17/10

(54) **Feuilles de verre destinées à la fabrication de vitrages**
Glasscheiben zur Herstellung von Verglasungen
Glass sheets for the production of glazing

(30) Priorité: 20.09.1996 FR 9611521
(43) Date de publication de la demande: 25.03.1998
(73) Titulaire: SAINT-GOBAIN GLASS FRANCE, 92400 Courbevoie (FR)
(72) Inventeur: Mazon, Pédro Pablo, 33005 Oviedo (ES)
(74) Mandataire: Le Cam, Stéphane Georges Elie

(56) Documents cités:
- EP-A- 0 452 207
- EP-A- 0 482 535
- EP-A- 0 483 087
- EP-A- 0 653 388
- WO-A-96/28394
- US-A- 5 411 922

## Description

La présente invention concerne des feuilles de verre aptes à la réalisation de vitrages susceptibles d'être montés sur des véhicules automobiles et industriels et plus précisément à servir de vitrages feuilletés, par exemple des pare-brises.

Les vitrages feuilletés visés par l'invention sont par exemple constitués de deux feuilles de verre et au moins une feuille transparente de « résine ionomère ».

L'expression « résine ionomère » désigne une résine pouvant être extrudée et comprenant des copolymères acide carboxylique-éthylène ou acide carboxylique-alpha oléfine, ces copolymères étant réticulés par réaction ionique. Ce type de résine est notamment décrit dans les brevets EP-483 087, EP-191 088, US-4 619 973, US-4 732 944 et US-4 906 703 auxquels on se référera pour le choix des résines ionomères adaptées à la réalisation des verres feuilletés selon l'invention. Comme résine ionomère, on peut utiliser notamment des résines à base de copolymères réticulés par réaction ionique et obtenus par combinaison de monomères d'éthylène, de styrène ou de propylène et de monomères d'acide acrylique ou méthacrylique ou d'anhydre maléique. La (les) résine(s) ionomère(s) utilisée(s) dans le vitrage feuilleté selon l'invention est (sont) généralement à base de copolymène(s) acide acrylique (ou méthacrylique)/éthylène (ou alpha oléfine), réticulés par réaction ionique. Les résines ionomères disponibles dans le commerce comprennent généralement les copolymères acides précédemment mentionnés, partiellement neutralisés ou non, ou des sels métalliques ou aminés desdits copolymères acides (on trouve notamment des ionomères de sodium ou de zinc).

Les feuilles de résine ionomère peuvent notamment être obtenues par coulée, extrusion, etc... . Plusieurs structures de vitrages selon l'invention peuvent être envisagées telles que les structures décrites dans les brevets EP-0 191 088 ou EP-0 483 087.

Les vitrages utilisés pour ce type d'application doivent satisfaire des exigences légales relatives à leur transmission lumineuse. Ainsi, ces vitrages doivent présenter un facteur de transmission lumineuse globale sous illuminant A (TL_{A}) au moins égal à 70 %.

La surface vitrée des véhicules automobiles étant actuellement très importante, les exigences de la clientèle en matière de confort devenant de plus en plus grandes, les constructeurs de ces véhicules recherchent tous les moyens qui permettent d'atténuer la sensation de chaleur éprouvée par les passagers soumis au rayonnement solaire. Mais, parallèlement, les constructeurs de véhicules automobiles cherchent à alléger le plus possible tout l'équipement en verre.

Pour maintenir une transmission lumineuse élevée dans la partie visible du spectre tout en absorbant le plus possible le reste de l'énergie solaire, il est connu d'introduire du fer dans la composition du verre utilisé pour la fabrication des feuilles. Le fer est présent dans le verre à la fois sous la forme d'oxyde ferrique (Fe₂O₃) et d'oxyde ferreux (FeO). La présence de Fe₂O₃ permet d'absorber les radiations U.V. et celles qui possèdent de courtes longueurs d'ondes dans la partie visible du spectre ; à l'opposé, la présence de FeO permet d'absorber les radiations du proche I.R. et celles correspondant aux grandes longueurs d'ondes du domaine visible. Si l'augmentation de la teneur en fer, sous ses deux formes oxydées, accentue l'absorption des radiations aux deux extrémités du spectre visible, cet effet est obtenu au détriment de la transmission lumineuse.

A ce jour, différentes solutions ont été proposées pour utiliser au mieux l'aptitude des oxydes de fer à absorber les radiations en conservant néanmoins la plus grande transmission lumineuse possible.

Ainsi, le brevet EP-B-297 404 décrit et revendique des verres silico-sodo-calciques dont la teneur en fer total, exprimée sous la forme de Fe₂O₃ est comprise entre 0,45 et 0,65 %. Ces verres sont élaborés dans des conditions telles qu'au moins 35% et de préférence au moins 50 % de fer total est sous la forme de FeO. L'augmentation de la teneur en FeO ainsi obtenue permet d'accentuer l'absorption des verres dans l'infrarouge et de diminuer le facteur de transmission énergétique globale (T_{E}). Toutefois, lorsqu'un verre est élaboré en présence de soufre dans des conditions fortement réductrices, ce dernier prend une couleur ambre due à la formation de chromophores qui résultent de la réaction entre le soufre et le fer ferrique. Pour éviter cela il est donc nécessaire de supprimer les sulfates dans le mélange vitrifiable et, comme la teneur en soufre dans un verre n'est jamais nulle, de veiller à ce que le pourcentage de fer ferrique reste faible, ce qui conduit à limiter rigoureusement la teneur en fer total. Il s'ensuit que la capacité de ces verres à absorber les radiations U.V. est médiocre.

Il est également connu de fabriquer des verres qui, grâce à une teneur en fer total plus élevée que celle préconisée par le brevet européen mentionné ci-dessus, concilient une bonne transmission lumineuse et une bonne absorption des radiations infrarouges et ultraviolettes.

Ainsi, le brevet US-A-5 214 008 décrit des verres dénués d'oxyde cérique et autres oxydes de ce type, qui contiennent entre 0,7 et 0,95 % en poids de fer total exprimé sous la forme Fe₂O₃. Ces verres sont élaborés dans des fours classiques, à partir de matières premières vitrifiables ordinaires. Le degré d'oxydo-réduction du verre est contrôlé grâce à l'introduction de carbone et de sulfate de sodium dans le mélange vitrifiable.

Ce degré d'oxydo-réduction varie dans des limites précises telles que le fer sous la forme FeO dans le verre varie de 0,19 à 0,24 % en poids, ledit verre présentant sous une épaisseur comprise entre 3,7 et 4,8 millimètres un facteur de transmission lumineuse supérieur à 70 %, un facteur de transmission dans l'ultraviolet inférieur à 38 % et un facteur de transmission énergétique global inférieur à 44,5 %.

D'autres compositions de verre silico-sodo-calcique permettent d'obtenir, sous une épaisseur déterminée, un facteur de transmission lumineuse au moins égal à 70 % et une bonne absorption des radiations infrarouges et ultraviolettes. C'est notamment le cas de celles décrites dans les demandes de brevet EP-A-488 110 et WO-91/07356. Outre les oxydes de fer, les verres préconisés par ces demandes de brevet contiennent de l'oxyde cérique et de l'oxyde de titane.

La présente invention a pour objet une feuille de verre formée à partir d'un verre susceptible d'être nappé à la surface d'un bain de métal fondu, dont les caractéristiques de transmission sont principalement régies par la présence d'oxydes de fer et qui présente, par rapport à des feuilles de verre ayant un facteur de transmission lumineuse globale comparable, une capacité d'absorption des radiations infrarouges et ultraviolettes au moins équivalente à celle desdites feuilles mais sous une plus faible épaisseur.

La présente invention a également pour objet des feuilles de verre permettant de réaliser des vitrages feuilletés, notamment pour véhicules automobiles dont l'épaisseur est plus faible que celle des vitrages connus, mais qui présentent néanmoins des caractéristiques de transmission comparables.

Ces buts sont atteints selon l'invention par une feuille de verre formée d'un verre silico-sodo-calcique qui comprend, exprimé en pourcentages pondéraux, de 1 à 2,5 % de fer total exprimé sous la forme de Fe₂O₃,la teneur pondérale en fer ferreux sous la forme FeO étant comprise entre 0,3 et 1%, ledit verre présentant sous une épaisseur comprise entre 1 et 1,9 mm, un facteur de transmission énergétique globale (T_{E}) inférieur à 55% et de préférence inférieur à 50 %.

De préférence, la feuille de verre présente sous une épaisseur de 1 à 1,9 mm, un facteur de transmission lumineuse globale sous illuminant A (TL_{A}) au moins égal à 70%.

De préférence encore, la feuille de verre présente sous une épaisseur comprise entre 1 et 1,9 mm, un facteur de radiations ultraviolettes inférieur à 25 %.

Les valeurs de transmission lumineuse et énergétique ont été déterminées selon la méthode Parry Moon Mass 2 ; la transmission dans l'ultraviolet a été déterminée selon la méthode définie par la norme ISO 9050.

Les feuilles de verre ainsi réalisées selon l'invention présentent les caractéristiques de transmission T_{E} et TL_{A} requises pour une utilisation comme vitrages automobiles avec des épaisseurs en verre inférieures à 1,9 mm.

Les verres utilisés pour fabriquer les feuilles de verre selon l'invention sont élaborés à partir de matières premières courantes auxquelles peut être ajouté du calcin dans des fours classiques utilisés dans le cadre de la technique du verre flotté. La fusion et l'affinage de ces verres a lieu dans des fours à flammes munis, éventuellement, d'électrodes assurant le chauffage du verre dans la masse par passage d'un courant électrique entre lesdites électrodes. Le degré d'oxydo-réduction des verres est contrôlé à l'aide d'agents oxydants, tel que le sulfate de sodium et d'agents réducteurs tel que du coke. La quantité de sulfate de sodium, introduite dans le mélange vitrifiable, considération prise des caractéristiques du four dans lequel ce mélange est fondu, est telle que la teneur en SO₃ dans le verre est généralement comprise entre 0,08 et 0,35 %. La teneur en agents réducteurs associée au sulfate, considération prise également des caractéristiques du four d'élaboration du verre, est calculée de manière à ce que le degré d'oxydo-réduction dudit verre soit maintenu entre des limites précises. Ces limites sont définies par les valeurs extrêmes du rapport entre la quantité de fer ferreux exprimé sous la forme FeO et la quantité de fer total exprimé sous la forme Fe₂O₃. Selon l'invention, ce rapport FeO/ Fe₂O₃ varie de 25 à 45 %.

Les verres utilisés pour fabriquer la feuille de verre selon l'invention peuvent contenir en outre jusqu'à environ 0,04 % d'un ou plusieurs des constituants suivants : CoO, Cr₂O₃, Se, TiO₂, MnO, NiO, CuO. Ces constituants peuvent provenir d'impuretés contenues dans certaines des matières premières vitrifiables utilisés et/ou du calcin de verre mélangé aux matières vitrifiables ; ils peuvent aussi être ajoutés volontairement au mélange vitrifiable pour donner, par exemple, un aspect teinté particulier.

Les verres utilisés pour fabriquer les feuilles de verre selon l'invention sont des verres silico-sodo-calciques qui comprennent les constituants ci-après dans les teneurs définies par les limites suivantes exprimées en pourcentages pondéraux :

| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 1 à 2,5 % |
| FeO | 0,3 à 1 % |
| CoO, Cr₂O₃, Se, TiO₂, MnO, NiO, CuO | 0 à 0,04 % |
| SO₃ | 0,08 à 0,35 % |

Outre les caractéristiques de transmission mentionnées précédemment, les verres utilisés pour fabriquer les feuilles de verre selon l'invention présentent généralement une teinte tirant sur le bleu-vert. Leur longueur d'onde dominante sous illuminant C est généralement comprise entre 490 et 510 nanomètres.

Selon une variante préférée de l'invention, la teneur en FeO est supérieure à 35% de la teneur en fer total exprimée sous la forme de Fe₂O₃.

Notamment selon cette variante préférée, la feuille de verre selon l'invention est avantageusement fabriquée à partir d'un verre silico-sodo-calcique qui comprend, exprimé en pourcentages pondéraux de 1,5 à 2,5% de fer total exprimé sous la forme Fe₂O₃, la teneur pondérale en fer ferreux sous la forme FeO étant comprise entre 0,5 et 1%.

Les verres utilisés pour fabriquer la feuille de verre selon l'invention sont de préférence des verres silico-sodo-calciques qui comprennent les constituants ci-après dans les teneurs définies par les limites suivantes exprimées en pourcentages pondéraux :

| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 1,5 à 2,5 % |
| CoO, Cr₂O₃, Se, TiO₂, MnO, NiO, CuO | 0 à 0,04 % |
| FeO | 0,5 à 1 % |
| SO₃ | 0,08 à 0,35 % |

Dans un autre mode de réalisation, les feuilles de verre selon l'invention sont, de préférence, fabriquées à partir d'un verre qui comprend les constituants ci-après dans les teneurs définies par les limites suivantes exprimées en pourcentages pondéraux :

| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃(fer total exprimé sous cette forme) | 1 à 2,5 % |
| CoO, Cr₂O₃, Se, TiO₂, MnO, NiO, CuO | 0 à 0,04 % |
| FeO | 0,3 à 1 % |
| SO₃ | 0,08 à 0,35 % |

Les feuilles, constituées d'un verre ainsi défini, présentent un facteur énergétique global (T_{E}) sous une épaisseur comprise entre 1 et 1,9 mm, encore amélioré, c'est-à-dire encore inférieur.

Dans ce dernier mode de réalisation le verre utilisé pour fabriquer une feuille de verre selon l'invention comprend, dans une variante préférée, une teneur en FeO qui représente au moins 35% de la teneur en fer total exprimée sous la forme Fe₂O₃.

Notamment selon cette variante préférée, la feuille de verre selon l'invention est avantageusement fabriquée à partir d'un verre silico-sodo-calcique qui comprend, exprimé en pourcentages pondéraux de 1,5 à 2,5% de fer total exprimé sous la forme Fe₂O₃, la teneur pondérale en fer ferreux sous la forme FeO étant comprise entre 0,5 et 1%.

Les verres utilisés pour fabriquer la feuille de verre selon ce mode de réalisation de l'invention sont de préférence des verres silico-sodo-calciques qui comprennent les constituants ci-après dans les teneurs définies par les limites suivantes exprimées en pourcentages pondéraux :

| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃(fer total exprimé sous cette forme) | 1,5 à 2,5 % |
| CoO, Cr₂O₃, Se, TiO₂, MnO, NiO, CuO | 0 à 0,04 % |
| FeO | 0,5 à 1 % |
| SO₃ | 0,08 à 0,35 % |

D'une manière générale, le verre utilisé pour fabriquer une feuille de verre selon l'invention peut comprendre jusqu'à 1,5 %, et de préférence au moins 0,2% en poids de CeO₂ et/ou 200 à 4000 ppm de TiO₂ qui favorisent l'absorption des radiations ultraviolettes.

De même, le verre peut avantageusement comprendre de 15 à 100 ppm de CoO et de préférence de 15 à 50 ppm.

Afin de mieux apprécier les avantages de la présente invention, des exemples de verre utilisés pour fabriquer des feuilles de verre selon l'invention sont donnés ci-dessous.

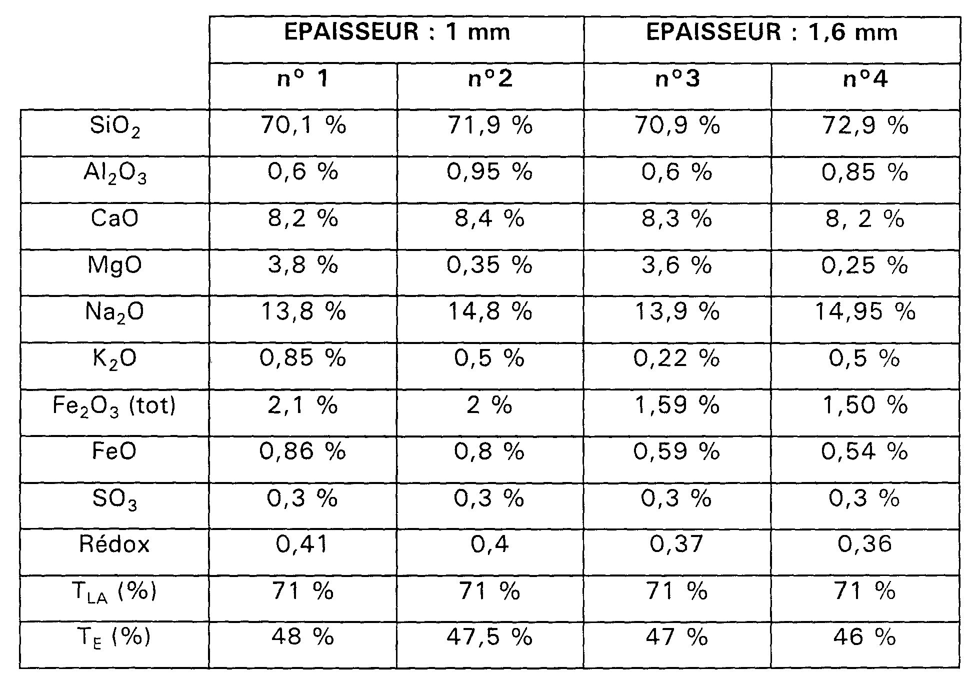

Les mesures de TL_{A} et T_{E} sont effectuées sur quatre verres différents pour des épaisseurs totales en verre de 1 et de 1,6 mm, c'est-à-dire correspondant à des vitrages feuilletés comportant respectivement deux feuilles de verre de 0,5 mm et 0,8 mm.

Ces verres peuvent être transformés en ruban continu en employant la technique du verre flotté. Les feuilles de verre selon l'invention sont obtenues par découpe d'un ruban qui présente des épaisseurs inférieures à 1 millimètre. Ces feuilles de verre sont notamment utilisées pour réaliser des vitrages feuilletés destinés à être montés sur des véhicules automobiles. Ces vitrages feuilletés sont par exemple constitués de deux feuilles de verre et d'au moins une résine ionomère intercalaire. Selon l'invention, l'épaisseur en verre des vitrages, c'est-à-dire la somme des épaisseurs des feuilles de verre constituant le vitrage est comprise entre 1 et environ 1,9 mm.

Les vitrages ainsi réalisés selon l'invention assurent une bonne absorption du rayonnement ultraviolet et un bon confort thermique et permettent de réaliser un allègement non négligeable de l'équipement verre du véhicule.

A l'instar d'autres vitrages, les vitrages obtenus à partir des verres selon l'invention peuvent être soumis au préalable à des traitement superficiels.

## Revendications

1. Feuille de verre formée d'un verre silico-sodo-calcique qui comprend exprimé en pourcentages pondéraux, de 1 à 2,5% de fer total exprimé sous la forme de Fe₂O₃, la teneur pondérale en FeO étant comprise entre 0,3 et 1%, et étant supérieure à 35% de la teneur en fer total exprimée sous la forme Fe₂O₃, ledit verre présentant sous une épaisseur comprise entre 1 et 1,9 mm un facteur de transmission énergétique globale (T_{E}) inférieur à 50%, et un facteur de transmission lumineuse globale sous illuminant A (TL_{A}) au moins égal à 70%.

2. Feuille de verre selon l'une des revendications 1, ***caractérisée en ce que*** ledit verre présente sous une épaisseur comprise entre 1 et 1,9 mm un facteur de transmission de radiations ultraviolettes inférieur à 25%.

3. Feuille de verre selon l'une des revendications précédentes, ***caractérisée en ce qu'elle*** est formée d'un verre comprenant les constituants ci-après dans les teneurs définies par les limites suivantes exprimées en pourcentages pondéraux :
| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 1 à 2,5 % |
| CoO, Cr₂O₃, Se, TiO₂, MnO, NiO, CuO | 0 à 0,04 % |
| FeO | 0,3 à 1 % |
| SO₃ | 0,08 à 0,35 % |

4. Feuille de verre selon la revendication 3, **caractérisée en ce qu'**elle est formée d'un verre comprenant les constituants ci-après dans les teneurs définies par les limites suivantes exprimées en pourcentages pondéraux :
| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 1,5 à 2,5 % |
| CoO, Cr₂O₃, Se, TiO₂, MnO, NiO, CuO | 0 à 0,04 % |
| FeO | 0,5 à 1 % |
| SO₃ | 0,08 à 0,35 % |

5. Feuille de verre selon l'une des revendications 1 ou 2, **caractérisée en ce qu'*elle*** est formée d'un verre comprenant les constituants ci-après dans les teneurs définies par les limites suivantes exprimées en pourcentages pondéraux :
| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃ (fer total exprimé sous cette forme) | 1 à 2,5 % |
| CoO, Cr₂O₃, Se, TiO₂, MnO, NiO, CuO | 0 à 0,04 % |
| FeO | 0,3 à 1 % |
| SO₃ | 0,08 à 0,35 % |

6. Feuille de verre selon la revendication 5, **caractérisée en ce qu'*elle*** est formée d'un verre comprenant les constituants ci-après dans les teneurs définies par les limites suivantes exprimées en pourcentages pondéraux :
| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃ (fer total exprimé sous cette forme) | 1,5 à 2,5 % |
| CoO, Cr₂O₃, Se, TiO₂, MnO, NiO, CuO | 0 à 0,04 % |
| FeO | 0,5 à 1 % |
| SO₃ | 0,08 à 0,35 % |

7. Feuille de verre selon l'une des revendications précédentes, ***caractérisée en ce qu'elle*** est formée d'un verre comprenant de 0,2 à 1,5% de CeO₂ et/ou 200 à 4000 ppm de TiO₂.

8. Feuille de verre selon l'une des revendications précédentes, ***caractérisée en ce qu'elle*** est formée d'un verre comprenant de 15 à 100 ppm de CoO et de préférence de 15 à 50 ppm.

9. Vitrage **caractérisé en ce qu'**il est constitué de deux feuilles de verre formées d'un verre dont la composition chimique est définie par l'une quelconque des revendications 1 à 8, séparées par une feuille intercalaire d'une matière organique, **caractérisé en ce que** l'épaisseur en verre du vitrage est comprise entre 1 et environ 1,9 mm.

10. Vitrage selon la revendication 9, ***caractérisé en ce que*** la feuille intercalaire comprend au moins une résine ionomère.

## Claims

1. Glass sheet formed from a soda-lime-silica glass comprising, expressed as percentages by weight, 1 to 2.5% total iron expressed in the form Fe₂O₃, the FeO weight content being between 0.3 and 1% and being more than 35% of the total iron content expressed in the form Fe₂O₃, said glass having for a thickness between 1 and 1.9 mm a total energy transmission factor (T_{E}) below 50% and a total light transmission factor under illuminant A (TL_{A}) of at least 70%.

2. Glass sheet according to claim 1, **characterized in that** said glass has for a thickness between 1 and 1.9 mm an ultraviolet radiation transmission factor below 25%.

3. Glass sheet according to one of the preceding claims, **characterized in that** it is formed from a glass comprising the following constituents with the contents defined by the following limits, expressed as percentages by weight:
| | |
|---|---|
| SiO₂ | 64 to 75% |
| Al₂O₃ | 0 to 5% |
| B₂O₃ | 0 to 5% |
| CaO | 2 to 15% |
| MgO | 0 to 5% |
| Na₂O | 9 to 18% |
| K₂O | 0 to 5% |
| Fe₂O₃ (total iron expressed in this form) | 1 to 2.5% |
| CoO, Cr₂O₃, Se, TiO₂, MnO, NiO, CuO | 0 to 0.04% |
| FeO | 0.3 to 1% |
| SO₃ | 0.08 to 0.35% |

4. Glass sheet according to claim 3, **characterized in that** it is formed from a glass comprising the following constituents with the contents defined by the following limits expressed as percentages by weight:
| | |
|---|---|
| SiO₂ | 64 to 75% |
| Al₂O₃ | 0 to 5% |
| B₂O₃ | 0 to 5% |
| CaO | 2 to 15% |
| MgO | 0 to 5% |
| Na₂O | 9 to 18% |
| K₂O | 0 to 5% |
| Fe₂O₃ (total iron expressed in this form) | 1.5 to 2.5% |
| CoO, Cr₂O₃, Se, TiO₂, MnO, NiO, CuO | 0 to 0.04% |
| FeO | 0.5 to 1% |
| SO₃ | 0.08 to 0.35% |

5. Glass sheet according to one of the claims 1 or 2, **characterized in that** it is formed from a glass comprising the following constituents with the contents defined by the following limits expressed as percentages by weight:
| | |
|---|---|
| SiO₂ | 68 to 75% |
| Al₂O₃ | 0 to 3% |
| B₂O₃ | 0 to 5% |
| CaO | 2 to 10% |
| MgO | 0 to 2% |
| Na₂O | 9 to 18% |
| K₂O | 0 to 8% |
| Fe₂O₃ (total iron expressed in this form) | 1 to 2.5% |
| CoO, Cr₂O₃, Se, TiO₂, MnO, NiO, CuO | 0 to 0.04% |
| FeO | 0.3 to 1% |
| SO₃ | 0.08 to 0.35% |

6. Glass sheet according to claim 5, **characterized in that** it is formed from a glass comprising the following constituents with the contents defined by the following limits expressed as percentages by weight:
| | |
|---|---|
| SiO₂ | 68 to 75% |
| Al₂O₃ | 0 to 3% |
| B₂O₃ | 0 to 5% |
| CaO | 2 to 10% |
| MgO | 0 to 2% |
| Na₂O | 9 to 18% |
| K₂O | 0 to 8% |
| Fe₂O₃ (total iron expressed in this form) | 1.5 to 2.5% |
| CoO, Cr₂O₃, Se, TiO₂, MnO, NiO, CuO | 0 to 0.04% |
| FeO | 0.5 to 1% |
| SO₃ | 0.08 to 0.35% |

7. Glass sheet according to one of the preceding claims, **characterized in that** it is formed from a glass comprising 0.2 to 1.5% CeO₂ and/or 200 to 4000 ppm of TiO₂.

8. Glass sheet according to one of the preceding claims, **characterized in that** it is formed by a glass comprising 15 to 100 ppm of CoO and preferably 15 to 50 ppm thereof.

9. Glazing, **characterized in that** it is constituted by two glass sheets formed from a glass, whose chemical composition is defined by any one of the claims 1 to 8, separated by a spacer sheet of an organic material, **characterized in that** the glass thickness of the glazing is between 1 and approximately 1.9 mm.

10. Glazing according to claim 9, **characterized in that** the spacer sheet comprises at least one ionomer resin.

## Patentansprüche

1. Glasscheibe, die aus einem Natron-Kalk-Silicatglas gebildet ist, das, angegeben in Gewichtsprozent, 1 bis 2,5 % in Form von Fe₂O₃ ausgedrücktes Gesamteisen enthält, wobei der Gewichtsgehalt des FeO 0,3 bis 1 % und mehr als 35 % des in Form von Fe₂O₃ ausgedrückten Gesamteisengehalts ausmacht und das Glas bei einer Dicke von 1 bis 1,9 mm einen globalen Strahlungstransmissionsgrad T_{E} von unter 50 % und einen globalen Lichttransmissionsgrad T_{LA} für Normlichtart A von mindestens 70 % aufweist.

2. Glasscheibe nach Anspruch 1, **dadurch gekennzeichnet, dass** das Glas bei einer Dicke von 1 bis 1,9 mm einen UV-Transmissionsgrad von unter 25 % aufweist.

3. Glasscheibe nach einem der vorhergehenden Ansprüche, **dadurch gekennzeichnet, dass** sie aus einem Glas gebildet ist, das folgende Bestandteile innerhalb nachstehender Gewichtsgrenzen umfasst:
| | |
|---|---|
| SiO₂ | 64 bis 75 % |
| Al₂O₃ | 0 bis 5 % |
| B₂O₃ | 0 bis 5 % |
| CaO | 2 bis 15 % |
| MgO | 0 bis 5 % |
| Na₂O | 9 bis 18 % |
| K₂O | 0 bis 5 % |
| Fe₂O₃ (Gesamteisen, angeg, in dieser Form) | 1 bis 2,5 % |
| CoO, Cr₂O₃, Se, TiO₂, MnO, NiO, CuO | 0 bis 0,04 % |
| FeO | 0,3 bis 1 % |
| SO₃ | 0,08 bis 0,35 %. |

4. Glasscheibe nach Anspruch 3, **dadurch gekennzeichnet, dass** sie aus einem Glas gebildet ist, das folgende Bestandteile innerhalb nachstehender Gewichtsgrenzen umfasst:
| | |
|---|---|
| SiO₂ | 64 bis 75 % |
| Al₂O₃ | 0 bis 5 % |
| B₂O₃ | 0 bis 5 % |
| CaO | 2 bis 15 % |
| MgO | 0 bis 5 % |
| Na₂O | 9 bis 18 % |
| K₂O | 0 bis 5 % |
| Fe₂O₃ (Gesamteisen, angeg. in dieser Form) | 1,5 bis 2,5 % |
| CoO, Cr₂O₃, Se, TiO₂, MnO, NiO, CuO | 0 bis 0,04 % |
| FeO | 0,5 bis 1 % |
| SO₃ | 0,08 bis 0,35 %. |

5. Glasscheibe nach Anspruch 1 oder 2, **dadurch gekennzeichnet, dass** sie aus einem Glas gebildet ist, das folgende Bestandteile innerhalb nachstehender Gewichtsgrenzen umfasst:
| | |
|---|---|
| SiO₂ | 68 bis 75 % |
| Al₂O₃ | 0 bis 3 % |
| B₂O₃ | 0 bis 5 % |
| CaO | 2 bis 10 % |
| MgO | 0 bis 2 % |
| Na₂O | 9 bis 18 % |
| K₂O | 0 bis 8 % |
| Fe₂O₃ (Gesamteisen, angeg. in dieser Form) | 1 bis 2,5 % |
| CoO, Cr₂O₃, Se, TiO₂, MnO, NiO, CuO | 0 bis 0,04 % |
| FeO | 0,3 bis 1 % |
| SO₃ | 0,08 bis 0,35 %. |

6. Glasscheibe nach Anspruch 5, **dadurch gekennzeichnet, dass** sie aus einem Glas gebildet ist, das folgende Bestandteile innerhalb nachstehender Gewichtsgrenzen umfasst:
| | |
|---|---|
| SiO₂ | 68 bis 75 % |
| Al₂O₃ | 0 bis 3 % |
| B₂O₃ | 0 bis 5 % |
| CaO | 2 bis 10 % |
| MgO | 0 bis 2 % |
| Na₂O | 9 bis 18 % |
| K₂O | 0 bis 8 % |
| Fe₂O₃ (Gesamteisen, angeg. in dieser Form) | 1,5 bis 2,5 % |
| CoO, Cr₂O₃, Se, TiO₂, MnO, NiO, CuO | 0 bis 0,04 % |
| FeO | 0,5 bis 1 % |
| SO₃ | 0,08 bis 0,35 %. |

7. Glasscheibe nach einem der vorhergehenden Ansprüche, **dadurch gekennzeichnet, dass** sie aus einem Glas gebildet ist, das 0,2 bis 1,5 % CeO₂ und/oder 200 bis 4 000 ppm TiO₂ enthält.

8. Glasscheibe nach einem der vorhergehenden Ansprüche, **dadurch gekennzeichnet, dass** sie aus einem Glas gebildet ist, das 15 bis 100 ppm und vorzugsweise 15 bis 50 ppm CoO enthält.

9. Verglasung, dadurch charakterisiert, dass sie aus zwei Glasscheiben zusammengesetzt ist, die aus einem Glas gebildet sind, dessen chemische Zusammensetzung von einem der Ansprüche 1 bis 8 definiert wird, und welche durch eine Zwischenfolie aus einem organischen Material getrennt sind, **dadurch gekennzeichnet, dass** die Glasdicke der Verglasung 1 bis etwa 1,9 mm beträgt.

10. Verglasung nach Anspruch 9, **dadurch gekennzeichnet, dass** die Zwischenfolie mindestens ein Ionomerharz umfasst.
